# EUROPEAN PATENT SPECIFICATION

(11) **EP 4 048 033 B1**
(45) Date of publication and mention of the grant of the patent: **11.12.2024**
(21) Application number: 21204466.3
(22) Date of filing: 25.10.2021
(51) Int. Cl.: H05B 47/17, H05B 45/30, H02M 1/00

(54) **LIGHT-EMITTING DIODE LIGHT STRING CONTROL SYSTEM USING CARRIER SIGNAL CONTROL AND SIGNAL CONTROL METHOD THEREOF**
SYSTEM ZUR STEUERUNG VON LEUCHTDIODENLICHTKETTEN MIT TRÄGERSIGNALSTEUERUNG UND SIGNALSTEUERUNGSVERFAHREN DAFÜR
SYSTÈME DE COMMANDE D'UNE CHAINE DE LUMIÈRE À DIODE ÉLECTROLUMINESCENTE À L'AIDE DE LA COMMANDE DU SIGNAL D'UN CIRCUIT ET PROCÉDÉ DE COMMANDE DE SIGNAL ASSOCIÉ

(30) Priority: 23.02.2021 TW 110106272
(43) Date of publication of application: 24.08.2022
(73) Proprietor: Semisilicon Technology Corp., 235 New Taipei City (TW)
(72) Inventor: PENG, Wen-Chi, 235 New Taipei City (TW)
(74) Representative: 2K Patentanwälte Blasberg Kewitz & Reichel

(56) References cited:
- US-A1- 2007 114 986
- US-A1- 2017 317 587

## Description

### BACKGROUND

### Technical Field

The present disclosure relates to a light-emitting diode (LED) light control system and a signal control method thereof, and more particularly to an LED light control system using carrier signal control and a signal control method thereof.

### Description of Related Art

The statements in this section merely provide background information related to the present disclosure and do not necessarily constitute prior art.

As the applications of light-emitting diodes (LEDs) are becoming more and more popular, and their manufacturing costs are getting lower and lower, the applications of LEDs in lighting or display are becoming more and more widespread. Therefore, there are more and more manners to operate and control lighting behavior of LEDs. In the applications of the LED light string, since it is necessary to set lighting behavior of each LED, the LED light string can produce a visual effect. Accordingly, a controller should be used to control each LED, and each controller also has the function of identifying signals so as to be able to determine whether the signals are specific lighting commands.

However, the signal received by the controller must be also used for the internal operating power of the controller. In the process of identifying the signal, the controller consumes a large amount of power, causing the voltage level of the signal to gradually decrease. If the voltage level of this signal cannot maintain the normal operation of the controller, the LED light string will fail.

US 2017/317587 A1 discloses a switching regulator with constant on time control which adopts a timer to time when the system is in discontinuous current mode (DCM). If the DCM lasted for a set time, a power stage in the switching regulator is controlled to be ON for a minimum on time duration, so as to ensure the switching regulator enters sleep mode. The control circuit comprises a control module for converting convert a DC voltage into a drive signal according to a command, and an electronic device coupled to the control module. A detection circuit is provided to generate a detected signal corresponding to the drive signal, and a logic circuit is provided to determine a first level being a first logic signal, a second logic signal, or a latch signal according to a time duration of the detected signal at the first level, and an oscillator is provided to provide a clock signal to the logic circuit for calculating the time duration according to the first level and go into a sleep mode according to a sleep signal. The logic circuit provides the sleep signal according to the detected signal at a second level, or the detected signal at the second level is used as the sleep signal for the oscillator. The application to control of LED light strings is not disclosed. Moreover, an LED module latching the first logic signal and the second logic signal as a drive command, and controlling lighting behavior of the at least one LED according to the drive command is not disclosed.

### SUMMARY

It is an object of the present invention to provide a light-emitting diode (LED) light string control system using carrier signal control and a corresponding signal control method of a light-emitting diode (LED) light string, enabling a reduced power consumption and a versatile control operation.

This problem is solved by a light-emitting diode (LED) light string control system using carrier signal control as claimed in claim 1, and by a signal control method of a light-emitting diode (LED) light string as claimed in claim 5. fr. Further advantageous embodiments are the subject-matter of the dependent claims.

The main purpose and effect of the present disclosure are that a logic determination is performed when the lighting drive signal is at the high-level voltage and the LED module sleeps when the lighting drive signal is at the low-level voltage. Therefore, when the lighting drive signal is at the low-level voltage, the LED module hardly consumes power, which can prevent the voltage level of the lighting drive signal from being lower than the reset voltage of the LED module due to excessive power consumption.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWINGS

The present disclosure can be more fully understood by reading the following detailed description of the embodiment, with reference made to the accompanying drawing as follows:
FIG. 1 is a block circuit diagram of a light-emitting diode (LED) light string control system using carrier signal control according to the present disclosure.
FIG. 2 is a block circuit diagram of an LED module according to the present disclosure.
FIG. 3 is a waveform diagram of signals related to the LED light string control system according to the present disclosure.
FIG. 4 is a flowchart of a signal control method of the LED light string control system according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

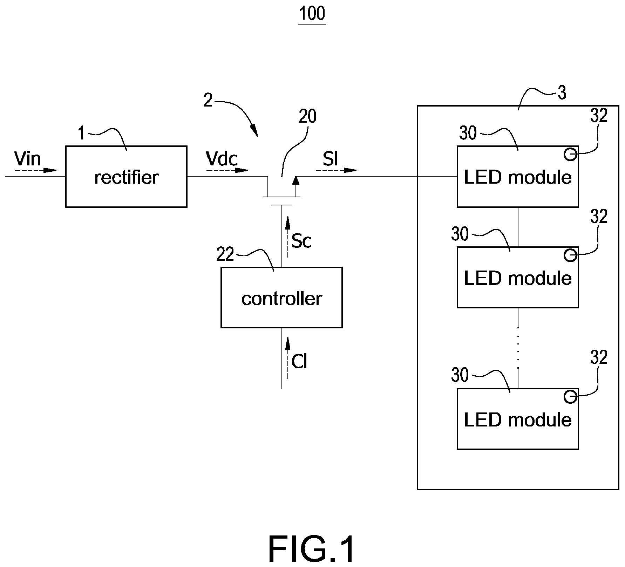

Please refer to FIG. 1, which shows a block circuit diagram of a light-emitting diode (LED) light string control system using carrier signal control according to the present disclosure. The LED light string control system 100 receives an input voltage Vin through an input end. The LED light string control system 100 includes a rectifier 1, a control module 2, and an LED light string 3. The control module 2 is coupled to the rectifier 1 and the LED light string 3. The rectifier 1 rectifies an AC input voltage Vin into a DC voltage Vdc. The control module 2 receives the DC voltage Vdc, and converts (switches) the DC voltage Vdc into a carry-based lighting drive signal Sl according to a lighting command Cl externally provided. The LED light string 3 is coupled to the control module 2, and the LED light string 3 includes at least one LED module 30 (multiple LED modules 30 are exemplified for demonstration in this embodiment). Each LED module 30 includes at least one LED 32, and the LED module 30 controls lighting behavior of the at least one LED 32 according to the lighting drive signal Sl. When the at least one LED module 30 is plural, these LED modules 30 may be coupled in series (shown in FIG. 1) or coupled in parallel (not shown). In one embodiment, the LED light string control system 100 may not include the rectifier 1, that is, the LED light string control system 100 directly receives the DC voltage Vdc as the input voltage. Alternatively, the rectifier 1 may be replaced by a DC converter, and the DC converter receives a DC input voltage Vin and converts the input voltage Vin into the DC voltage Vdc.

The control module 2 includes a power switch 20 and a controller 22. The power switch 20 is coupled between the rectifier 1 and the LED light string 3. The controller 22 is coupled to a control end of the power switch 20, and provides a control signal Sc to control turning on and turning off the power switch 20 according to the lighting command Cl so as to convert (switch) the DC voltage Vdc into the lighting drive signal Sl by turning on and turning off the power switch 20. In particular, the controller 22 may not include a traditional lighting signal generator, and generates the lighting drive signal Sl with changes in high-level voltage and low-level voltage by controlling turning on or turning off the power switch 20.

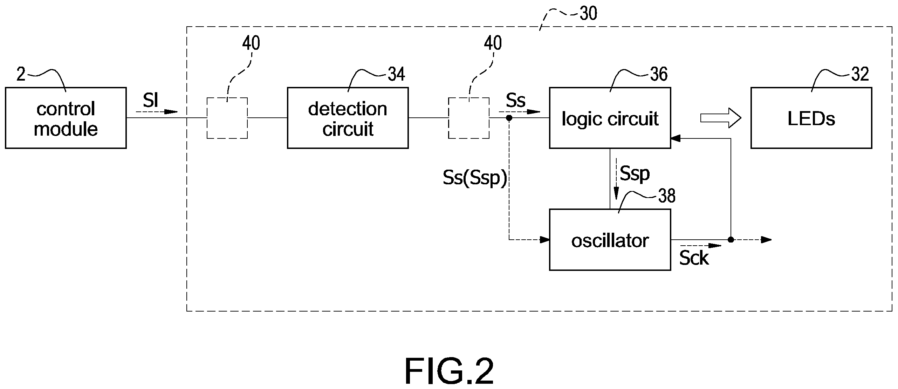

Please refer to FIG. 2, which shows a block circuit diagram of an LED module according to the present disclosure, and also refer to FIG. 1. Each LED module 30 further includes a detection circuit 34, a logic circuit 36, and an oscillator 38. The detection circuit 34 is coupled to the control module 2, and detects the lighting drive signal Sl to generate a detected signal Ss corresponding to the lighting drive signal Sl. The logic circuit 36 is coupled to the detection circuit 34, and determines whether to provide a sleep signal Ssp according to the detected signal Ss. In one embodiment, the sleep signal is, but not limited to, an internal signal. The oscillator 38 is coupled to the logic circuit 36, and whether the oscillator 38 goes to sleep (i.e., goes into a sleep mode) or not depends on whether it receives the sleep signal Ssp.

Specifically, the detection circuit 34 may generate the detected signal Ss complementary to the lighting drive signal Sl or proportional to the lighting drive signal Sl by detecting the lighting drive signal Sl. The logic circuit 36 determines whether the first level is the first logic signal (such as logic "0"), the second logic signal (such as logic "1"), or the latch signal according to a time duration of the detected signal Ss at the first level. The logic circuit 36 provides the sleep signal Ssp according to the detected signal Ss at a second level, or the detected signal Ss at the second level is directly used as the sleep signal Ssp for the oscillator 38. Therefore, the oscillator 38 is controlled to go to sleep to save power consume when the lighting drive signal Sl is at the low-level voltage so that the low-level voltage will be not consumed too much and be not lower than the reset voltage. When the oscillator 38 does not receive the sleep signal Ssp, the oscillator 38 provides the clock signal Sck to the logic circuit 36 for calculating the time duration. When the oscillator 38 receives the sleep signal Ssp, the oscillator 38 goes to sleep (or goes into a sleep mode) and does not provide the clock signal Sck so that internal circuits (such as latch circuits, drive circuits, etc.) operated based on the clock signal Sck will also go to sleep due to the absence of the clock signal Sck, thereby significantly reducing the power consume of the LED module 30.

When the logic circuit 36 determines that the time duration of the detected signal Ss at the first level is the latch signal, the logic circuit 36 notifies the LED module 30 to latch and memorize (store) the temporarily stored first logic signal and second logic signal as a drive command. Afterward, the LED module 30 may use the drive command to control lighting behavior of the LED 32. Take the complementary of the lighting drive signal Sl and the detected signal Ss as an example, the first level, i.e., the low-level voltage is corresponding to the high-level voltage of the lighting drive signal Sl, and the second level, i.e., the high-level voltage) is corresponding to the low-level voltage of the lighting drive signal Sl.

Moreover, in order to reduce the installation cost of the LED light string control system 100, the LED module 30 without the power-off memory function is usually implemented. The LED module 30 with the power-off memory function will reset and forget the settings and the memorized drive commands when the received power (i.e., the lighting drive signal SI) of the LED module 30 is lower than the reset voltage (i.e., the required working voltage for internal operation). In order to avoid the above situation, the operation of the LED light string control system 100 is usually to prevent the voltage level of the lighting drive signal Sl from being lower than the reset voltage as much as possible. However, the lighting drive signal Sl is usually a pulse voltage with alternating high voltage level and low voltage level. When the lighting drive signal Sl is at the low level voltage for logic determination (that is, the first logic signal, the second logic signal, and the latch signal are determined), the LED module 30 is still working and consumes power. Therefore, it is easy to happen that the voltage level of the lighting drive signal Sl is consumed below the reset voltage due to excessive power consumption during the determination process.

The main purpose and effect of the present disclosure are that a logic determination is performed when the lighting drive signal Sl is at the high-level voltage and the LED module 30 goes to sleep when the lighting drive signal Sl is at the low-level voltage. Therefore, when the lighting drive signal Sl is at the low-level voltage, the LED module 30 hardly consumes power, which can prevent the voltage level of the lighting drive signal Sl from being lower than the reset voltage of the LED module 30 due to excessive power consumption.

Please refer to FIG. 2 again, each LED module 30 further include a filter circuit 40, and the filter circuit 40 is coupled to the detection circuit 34. The filter circuit 40 may be coupled between the detection circuit 34 and the control module 2 for filtering noise of the lighting drive signal Sl. Alternatively, the filter circuit 40 may be coupled between the detection circuit 34 and the logic circuit 36 for filtering noise of the detected signal Ss. Specifically, since the lighting drive signal Sl is a high-power signal and the power switch 20 is switched at a high frequency, the lighting drive signal Sl produces more rough edges or switching surges, and the rough edges or switching surges will affect the detection accuracy of the time duration of the detected signal Ss. It even misjudges the signal that should be logic "0" or logic "1" as other signals. Therefore, using the filter circuit 40 to filter noise of the lighting drive signal Sl or noise of the detected signal Ss is a preferred embodiment of the LED light string control system 100. Since the LED module 30 is a weak-current operation and consumes less power during operation, the filter circuit 40 coupled between the detection circuit 34 and the logic circuit 36 is a preferred embodiment.

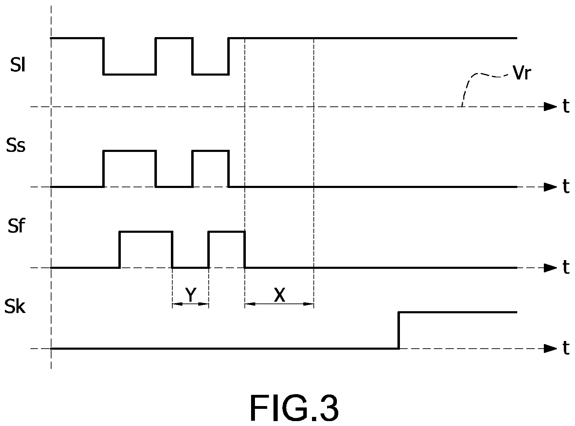

Please refer to FIG. 3, which shows a waveform diagram of signals related to the LED light string control system according to the present disclosure, and also refer to FIG. 1 and FIG. 2. In FIG. 3, Sl is the lighting drive signal, Ss is the detected signal, Sf is a filtered detected signal (hereinafter referred to as "filtered signal Sf', and Sk is a latched signal. The control module 2 converts (switches) the DC voltage Vdc into the carry-based lighting drive signal Sl. The lighting drive signal Sl has a high-level voltage and a low-level voltage, and the low-level voltage is not lower than a reset voltage Vr. In the lighting drive signal Sl, there is a high-level voltage with a longer width X, which represents that the previous carrier has been generated, and the correspondingly received LED module 30 can latch the drive command corresponding to the previous carrier. The detection circuit 34 detects the lighting drive signal Sl to generate a detected signal Ss complementary to the lighting drive signal Sl, and the filter circuit 40 filters the detected signal Ss to generate the filtered signal Sf that slightly delays to the detected signal Ss.

When the detected signal Ss is at the second level (that is, when the lighting drive signal Sl is at a low-level voltage), the LED module 30 controls the oscillator 38 to go to sleep so that most of the circuits that consume more power inside the LED module 30 are slept and the low-level voltage of the lighting drive signal Sl consumes less power. Therefore, the low-level voltage will be not consumed too much and be not lower than the reset voltage Vr. When the detected signal Ss is at the first level (that is, when the lighting drive signal Sl is at a high-level voltage), the logic circuit 36 uses the clock signal Sck provided by the oscillator 38 to calculate the time duration Y (for example, a wider width is determined to be a logic "1" and a narrower width is determined to be a logic "0"). When the width of the detected signal Ss at the first level is the widest (i.e., the width X), it is determined as the latch signal, and the previous filtered signal Sf is latched. Finally, after latching for a short period of time, the latched signal Sk is provided to inform the completion of latching the drive command. In particular, since the latch signal is usually maintained for a long time and the time for determining the low-level lighting drive signal Sl is long to make the LED module 30 consume power for a long time, it is easy to produce a situation where the lighting drive signal Sl is lower than the reset voltage Vr. Therefore, the low-level latch signal changes to the high-level latch signal (i.e., the width X is the high-level voltage) by the controller 22 to avoid this situation that the lighting drive signal Sl is lower than the reset voltage Vr.

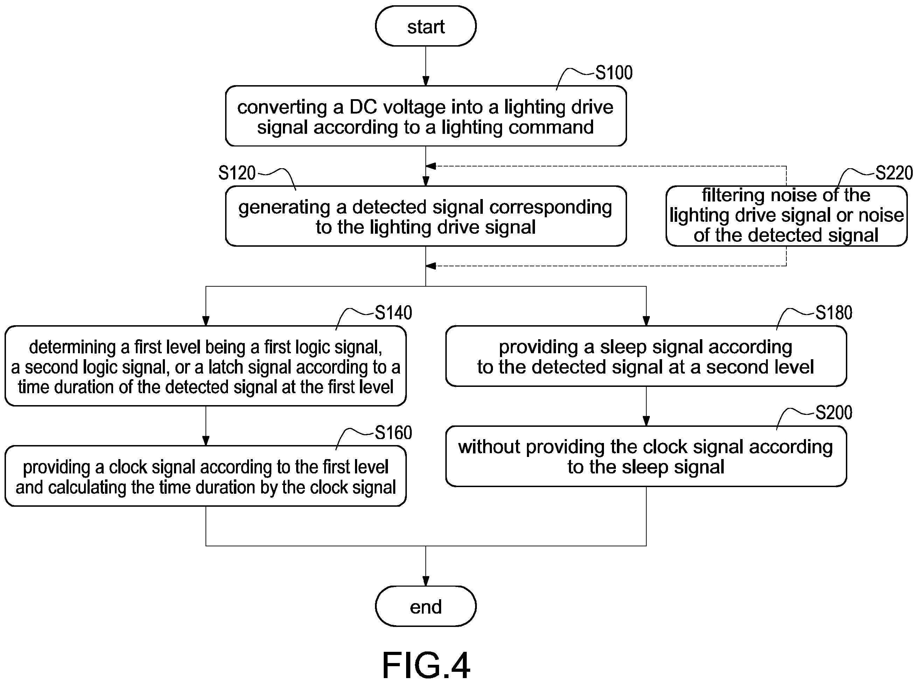

Please refer to FIG. 4, which shows a flowchart of a signal control method of the LED light string control system according to the present disclosure, and also refer to FIG. 1 to FIG. 3. The signal control method includes steps of converting a DC voltage into a lighting drive signal according to a lighting command (S100). In one embodiment, a controller 22 is used to provide a control signal Sc to control turning on or turning off a power switch 20 according to a lighting command Cl so as to convert the DC voltage Vdc into the lighting drive signal Sl. Afterward, generating a detected signal corresponding to the lighting drive signal (S120). In one embodiment, a detection circuit 34 is used to detect the lighting drive signal Sl to generate the detected signal Ss corresponding to the lighting drive signal Sl, for example, the detected signal Ss is complementary to the lighting drive signal Sl or proportional to the lighting drive signal Sl. Afterward, determining a first level being a first logic signal, a second logic signal, or a latch signal according to a time duration of the detected signal at the first level (S140). In one embodiment, a logic circuit 36 is used determines that the first level is the first logic signal (such as logic "0"), the second logic signal (such as logic "1"), or the latch signal according to the time duration of the detected signal Ss at the first level.

Afterward, providing a clock signal according to the first level and calculating the time duration by the clock signal (S160). In one embodiment, an oscillator 38 is used to provide a clock signal Sck to the logic circuit 36 notified by the detection circuit 34 or the logic circuit 36 for calculating the time duration according to the detected signal Ss at the first level so as to determine that the first level of the detected signal Ss is the first logic signal, the second logic signal, or the latch signal. Afterward, providing a sleep signal according to the detected signal at a second level (S180). In one embodiment, the logic circuit 36 is used to provide the sleep signal Ssp according to the detected signal Ss at the second level, or the detected signal Ss at the second level is directly used as the sleep signal Ssp for the oscillator 38. Finally, without providing the clock signal according to the sleep signal (S200). When the oscillator 38 receives the sleep signal Ssp, the oscillator 38 goes to sleep and does not provide the clock signal Sck so that internal circuits (such as latch circuits, drive circuits, etc.) operated based on the clock signal Sck will also go to sleep due to the absence of the clock signal Sck.

In order to avoid the rough edges or switching surges produced by the lighting drive signal Sl from affecting the detection accuracy of the time duration of the detected signal Ss, after or before the step (S120), filtering noise of the lighting drive signal or noise of the detected signal (S220). In one embodiment, a filter circuit 40 is used to filter noise of the lighting drive signal Sl or noise of the detected signal Ss to avoid the rough edges or switching surges from affecting the detection accuracy of the time duration of the detected signal Ss.

## Claims

1. A light-emitting diode (LED) light string control system (100) using carrier signal control, comprising:
a control module (2) configured to convert a DC voltage (Vdc) into a lighting drive signal (Sl) according to a lighting command (Cl), and
an LED light string (3) comprising at least one LED module (30), and coupled to the control module (2), and the at least one LED module (30) comprising:
a detection circuit (34) configured to generate a detected signal (Ss) corresponding to the lighting drive signal (Sl),
a logic circuit (36) configured to determine a first level being a first logic signal, a second logic signal, or a latch signal according to a time duration of the detected signal (Ss) at the first level,
an oscillator (38) configured to provide a clock signal (Sck) to the logic circuit (36) for calculating the time duration according to the first level and go into a sleep mode according to a sleep signal (Ssp), and
at least one LED (32),
wherein the logic circuit (36) is configured to provide the sleep signal (Ssp) according to the detected signal (Ss) at a second level, or the oscillator is configured to receive the detected signal (Ss) at the second level that is used as the sleep signal (Ssp) for the oscillator (38),
wherein the at least one LED module (30) is configured to latch the first logic signal and the second logic signal as a drive command, and control lighting behavior of the at least one LED (32) according to the drive command, and
wherein the oscillator (38) does not provide the clock signal (Sck) when in the sleep mode.

2. The LED light string control system (100) as claimed in claim 1, wherein the at least one LED module (30) further comprises:
a filter circuit (40) coupled to the detection circuit (34), and the filter circuit (40) configured to filter noise of the lighting drive signal (Sl) or noise of the detected signal (Ss).

3. The LED light string control system (100) as claimed in claim 1, wherein the control module (2) comprises:
a power switch (20) coupled to the LED light string (3), and configured to receive the DC voltage (Vdc), and
a controller (22) coupled to the power switch (20), and configured to receive the lighting command (Cl),
wherein the controller (22) is configured to provide a control signal (Sc) to control turning on or turning off the power switch (20) according to the lighting command (Cl) to convert the DC voltage (Vdc) into the lighting drive signal (Sl).

4. The LED light string control system (100) as claimed in claim 1, wherein the at least one LED module (30) is plural, and the LED modules (30) are coupled in series or coupled in parallel.

5. A signal control method of a light-emitting diode (LED) light string (3) comprising at least one LED module (30), the at least one LED module (30) comprising a detection circuit (34), a logic circuit (36), an oscillator (38), and at least one LED (32), comprising steps of:
converting a DC voltage (Vdc) into a lighting drive signal (Sl) by the control module (2) according to a lighting command (Cl),
generating a detected signal (Ss) corresponding to the lighting drive signal (Sl) by the detection circuit (34),
determining a first level being a first logic signal, a second logic signal, or a latch signal by the logic circuit (36) according to a time duration of the detected signal (Ss) at the first level,
providing a clock signal (Sck) by the oscillator (38) to the logic circuit (36) for calculating the time duration according to the first level,
latching the first logic signal and the second logic signal as a drive command by the least one LED module (30),
controlling lighting behavior of the at least one LED (32) by the at least one LED module (30) according to the drive command,
providing a sleep signal (Ssp) by the logic circuit (36) to the oscillator (38) according to the detected signal (Ss) at a second level, and
entering into sleep mode by the oscillator (38) according to the sleep signal (Ssp) and when in the sleep mode not providing the clock signal (Sck).

6. The signal control method as claimed in claim 5, further comprising a step of:
providing a control signal (Sc) by a controller (22) of the control module (2) to control turning on or turning off a power switch (20) of the control module (2) according to the lighting command (Cl) to convert the DC voltage (Vdc) into the lighting drive signal (Sl).

7. The signal control method as claimed in claim 5, further comprising a step of:
filtering noise of the lighting drive signal (Sl) or noise of the detected signal (Ss) by a filter circuit (40) of the at least one LED module (30).

## Patentansprüche

1. System zur Steuerung von Leuchtdioden(LED)-Lichterketten (100) unter Verwendung einer Trägersignalsteuerung, umfassend:
ein Steuerungsmodul (2), das so konfiguriert ist, dass es eine Gleichspannung (Vdc) in ein Beleuchtungsansteuerungssignal (Sl) entsprechend einem Beleuchtungsbefehl (Cl) umwandelt, und
eine LED-Lichterkette (3), die mindestens ein LED-Modul (30) umfasst und mit dem Steuerungsmodul (2) gekoppelt ist, wobei das mindestens eine LED-Modul (30) umfasst:
eine Erfassungsschaltung (34), die so konfiguriert ist, dass sie ein Erfassungssignal (Ss) erzeugt, das dem Beleuchtungsansteuerungssignal (Sl) entspricht,
eine Logikschaltung (36), die so konfiguriert ist, dass sie einen ersten Pegel, der ein erstes Logiksignal, ein zweites Logiksignal oder ein Verriegelungssignal ist, entsprechend einer Zeitdauer des erfassten Signals (Ss) auf dem ersten Pegel bestimmt,
einen Oszillator (38), der so konfiguriert ist, dass er ein Taktsignal (Sck) an die Logikschaltung (36) zum Berechnen der Zeitdauer gemäß dem ersten Pegel bereitstellt und entsprechend einem Schlafsignal (Ssp) in einen Schlafmodus übergeht, und
mindestens eine LED (32),
wobei die Logikschaltung (36) so konfiguriert ist, dass sie das Schlafsignal (Ssp) entsprechend dem erfassten Signal (Ss) auf einem zweiten Pegel bereitstellt, oder wobei der Oszillator so konfiguriert ist, dass er das erfasste Signal (Ss) auf dem zweiten Pegel empfängt, das als Schlafsignal (Ssp) für den Oszillator (38) verwendet wird,
wobei das mindestens eine LED-Modul (30) so konfiguriert ist, dass es das erste Logiksignal und das zweite Logiksignal als Ansteuerungsbefehl speichert und das Leuchtverhalten der mindestens einen LED (32) entsprechend dem Ansteuerungsbefehl steuert, und
wobei der Oszillator (38) das Taktsignal (Sck) nicht bereitstellt, wenn dieser sich in dem Schlafmodus befindet.

2. System zur Steuerung von LED-Lichterketten (100) nach Anspruch 1, wobei das mindestens eine LED-Modul (30) ferner umfasst
eine Filterschaltung (40), die mit der Erfassungsschaltung (34) gekoppelt ist, wobei die Filterschaltung (40) so konfiguriert ist, dass sie ein Rauschen des Beleuchtungsansteuerungssignals (Sl) oder ein Rauschen des erfassten Signals (Ss) herausfiltert.

3. System zur Steuerung von LED-Lichterketten (100) nach Anspruch 1, wobei das Steuerungsmodul (2) umfasst:
einen Leistungsschalter (20), der mit der LED-Lichterkette (3) gekoppelt und so konfiguriert ist, dass er die Gleichspannung (Vdc) empfängt, und
eine Steuerung (22), die mit dem Leistungsschalter (20) gekoppelt und so konfiguriert ist, dass diese den Beleuchtungsbefehl (Cl) empfängt,
wobei die Steuerung (22) so konfiguriert ist, dass sie ein Steuersignal (Sc) bereitstellt, um das Einschalten oder Ausschalten des Leistungsschalters (20) entsprechend dem Beleuchtungsbefehl (Cl) zu steuern, um die Gleichspannung (Vdc) in das Beleuchtungsansteuerungssignal (Sl) umzuwandeln.

4. System zur Steuerung von LED-Lichterketten (100) nach Anspruch 1, wobei das mindestens eine LED-Modul (30) eine Mehrzahl von LED-Modulen aufweist und die LED-Module (30) in Reihe geschaltet oder parallel geschaltet sind.

5. Verfahren zur Signalsteuerung von Leuchtdioden(LED)-Lichterketten (3), die mindestens ein LED-Modul (30) umfassen, wobei das mindestens eine LED-Modul (30) eine Erfassungsschaltung (34), eine Logikschaltung (36), einen Oszillator (38) und mindestens eine LED (32) umfasst, mit den folgenden Schritten:
Umwandeln einer Gleichspannung (Vdc) in ein Beleuchtungsansteuerungssignal (Sl) durch das Steuerungsmodul (2) entsprechend einem Beleuchtungsbefehl (Cl),
Erzeugen eines erfassten Signals (Ss), das dem Beleuchtungsansteuerungssignal (Sl) entspricht, durch die Erfassungsschaltung (34),
Bestimmen eines ersten Pegels, bei dem es sich um ein erstes Logiksignal, ein zweites Logiksignal oder ein Verriegelungssignal handelt, durch die Logikschaltung (36) entsprechend einer Zeitdauer des erfassten Signals (Ss) auf dem ersten Pegel,
Bereitstellen eines Taktsignals (Sck) durch den Oszillator (38) an die Logikschaltung (36) zum Berechnen der Zeitdauer entsprechend dem ersten Pegel,
Verriegeln des ersten Logiksignals und des zweiten Logiksignals als Ansteuerungsbefehl durch das mindestens eine LED-Modul (30),
Steuern des Leuchtverhaltens der mindestens einen LED (32) durch das mindestens eine LED-Modul (30) entsprechend dem Ansteuerungsbefehl,
Bereitstellen eines Schlafsignals (Ssp) durch die Logikschaltung (36) an den Oszillator (38) entsprechend dem erfassten Signal (Ss) mit einem zweiten Pegel, und
Eintreten in den Schlafmodus durch den Oszillator (38) entsprechend dem Schlafsignal (Ssp) und, wenn dieser sich im Schlafmodus befindet und das Taktsignal (Sck) nicht bereitstellt.

6. Signalsteuerungsverfahren nach Anspruch 5, das ferner einen Schritt umfasst, bei dem:
ein Steuersignal (Sc) durch eine Steuerung (22) des Steuerungsmoduls (2) bereitgestellt wird, um das Einschalten oder Ausschalten eines Leistungsschalters (20) des Steuerungsmoduls (2) entsprechend dem Beleuchtungsbefehl (Cl) zu steuern, um die Gleichspannung (Vdc) in das Beleuchtungsansteuerungssignal (Sl) umzuwandeln.

7. Signalsteuerungsverfahren nach Anspruch 5, das ferner einen Schritt umfasst, bei dem:
ein Rauschen des Beleuchtungsansteuerungssignals (Sl) oder ein Rauschen des erfassten Signals (Ss) durch eine Filterschaltung (40) des mindestens einen LED-Moduls (30) herausgefiltert wird.

## Revendications

1. Un système de commande d'une chaîne de lumière à diodes électroluminescentes (DEL) (100) utilisant la commande de signal porteur, comprenant :
un module de commande (2) configuré pour convertir une tension continue (Vdc) en un signal de commande d'éclairage (Sl) en fonction d'une commande d'éclairage (Cl), et
une chaîne de lumière à DEL (3) comprenant au moins un module à DEL (30), et couplée au module de commande (2), et au moins un module à DEL (30) comprenant :
un circuit de détection (34) configuré pour générer un signal détecté (Ss) correspondant au signal de commande d'éclairage (SI),
un circuit logique (36) configuré pour déterminer un premier niveau qui est un premier signal logique, un second signal logique ou un signal de verrouillage en fonction d'une durée du signal détecté (Ss) au premier niveau,
un oscillateur (38) configuré pour fournir un signal d'horloge (Sck) au circuit logique (36) pour calculer la durée en fonction du premier niveau et passer en mode veille en fonction d'un signal de veille (Ssp), et
au moins une DEL (32),
le circuit logique (36) est configuré pour fournir le signal de veille (Ssp) en fonction du signal détecté (Ss) à un second niveau, ou l'oscillateur est configuré pour recevoir le signal détecté (Ss) au second niveau qui est utilisé comme signal de veille (Ssp) pour l'oscillateur (38),
dans lequel au moins un module DEL (30) est configuré pour verrouiller le premier signal logique et le second signal logique en tant que commande d'entraînement, et pour contrôler le comportement d'éclairage d'au moins une DEL (32) en fonction de la commande d'entraînement, et
dans lequel l'oscillateur (38) ne fournit pas le signal d'horloge (Sck) lorsqu'il est en mode veille.

2. Le système de commande d'une chaîne de lumière à DEL (100) selon la revendication 1, dans lequel le au moins un module à DEL (30) comprend en outre :
un circuit de filtrage (40) couplé au circuit de détection (34), et le circuit de filtrage (40) configuré pour filtrer le bruit du signal de commande d'éclairage (Sl) ou le bruit du signal détecté (Ss).

3. Le système de commande d'une chaîne de lumière à DEL (100) selon la revendication 1, dans lequel le module de commande (2) comprend :
un interrupteur d'alimentation (20) couplé à la chaîne de lumière à DEL (3) et configuré pour recevoir la tension continue (Vdc), et
un contrôleur (22) couplé à l'interrupteur (20) et configuré pour recevoir la commande d'éclairage (Cl),
dans lequel le contrôleur (22) est configuré pour fournir un signal de commande (Sc) afin de commander l'activation ou la désactivation de l'interrupteur d'alimentation (20) en fonction de la commande d'éclairage (Cl) pour convertir la tension continue (Vdc) en signal de commande d'éclairage (Sl).

4. Le système de commande d'une chaîne de lumière à DEL (100) selon la revendication 1, dans lequel le au moins un module DEL (30) est pluriel, et les modules DEL (30) sont couplés en série ou couplés en parallèle.

5. Un procédé de commande du signal d'une chaîne de lumière à diodes électroluminescentes (DEL) (3) comprenant au moins un module DEL (30), le module DEL (30) comprenant un circuit de détection (34), un circuit logique (36), un oscillateur (38) et au moins une DEL (32), comprenant les étapes suivantes :
convertir une tension continue (Vdc) en un signal de commande d'éclairage (Sl) par le module de commande (2) en fonction d'une commande d'éclairage (Cl),
générer un signal détecté (Ss) correspondant au signal de commande d'éclairage (Sl) par le circuit de détection (34),
déterminer un premier niveau qui est un premier signal logique, un second signal logique ou un signal de verrouillage par le circuit logique (36) en fonction d'une durée du signal détecté (Ss) au premier niveau,
fournir un signal d'horloge (Sck) par l'oscillateur (38) au circuit logique (36) pour calculer la durée en fonction du premier niveau,
enregistrer le premier signal logique et le second signal logique en tant que commande d'entraînement par le module DEL au moins (30),
contrôler le comportement d'éclairage d'au moins une DEL (32) par au moins un module DEL (30) en fonction de la commande d'entraînement,
fournir un signal de veille (Ssp) par le circuit logique (36) à l'oscillateur (38) en fonction du signal détecté (Ss) à un deuxième niveau, et
l'oscillateur (38) entre en mode veille en fonction du signal de veille (Ssp) et ne fournit pas le signal d'horloge (Sck) lorsqu'il est en mode veille.

6. Procédé de commande de signaux selon la revendication 5, comprenant en outre une étape consistant à :
fournir un signal de commande (Sc) par un contrôleur (22) du module de commande (2) pour commander l'activation ou la désactivation d'un interrupteur d'alimentation (20) du module de commande (2) en fonction de la commande d'éclairage (Cl) pour convertir la tension continue (Vdc) en signal de commande d'éclairage (Sl).

7. Le procédé de commande du signal selon la revendication 5, comprenant en outre une étape consistant à :
filtrer le bruit du signal de commande d'éclairage (Sl) ou le bruit du signal détecté (Ss) par un circuit de filtrage (40) du au moins un module DEL (30).
